# EUROPÄISCHE PATENTANMELDUNG

(11) **EP 1 004 553 A1**
(43) Veröffentlichungstag der Anmeldung: **31.05.2000**
(21) Anmeldenummer: 99119860.7
(22) Anmeldetag: 07.10.1999
(51) Int. Cl.: C04B 7/43

(54) **Verfahren und Anlage zur thermischen Behandlung von mehlförmigen Rohmaterialien**

(30) Priorität: 25.11.1998 DE 19854582
(71) Anmelder: KHD Humboldt-Wedag AG, 51103 Köln (DE)
(72) Erfinder: Ramesohl, Hubert, 51427 Bergisch Gladbach (DE); Brachthäuser, Michael, 41542 Dormagen (DE); Hand, Andreas, 51103 Köln (DE); Kuhnke, Stephan, Dr., 50374 Erftstadt (DE)

(57) **Zusammenfassung**

Um für Zementklinkerproduktionslinien einen dem Drehrohrofen vorgeschalteten und mit Zweitfeuerungen ausgestatteten Calcinator zu schaffen, der einerseits ein hochgradig calciniertes Rohmehl und andererseits ein Abgas mit sehr geringen NOₓ-Emissionen sowie einen möglichst vollständigen Restausbrand CO-haltiger NOₓ-Reduktionszonen zu ermöglichen, wird erfindungsgemäß vorgeschlagen, daß sowohl in der Drehofenabgassteigleitung (15) als auch in der Kühlerabluftleitung (17) (Tertiärluftkanal) eine Brennstelle (19 bzw. 20) mit unterstöchiometrischer Brennstoffverbrennung angeordnet ist, und daß suspensionsströmungsabwärts gesehen in den Drehofenabgaskanal/Tertiärluftkanal Verbrennungsluft (27) einmündet, die über wenigstens eine Zweigleitung (28 bzw. 28a) von der vom Klinkerkühler kommenden Tertiärluftleitung (18) abgezweigt ist.

## Beschreibung

Die Erfindung betrifft ein Verfahren zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (Drehofen) und ein Abluftstrom (Tertiärluft) der Kühlstufe (Klinkerkühler) in der mit Brennstoff versorgten Calcinierstufe zur Calcination des Rohmehls genutzt werden, wobei die Gas-Feststoff-Suspension in der Calcinierstufe umgelenkt und in den untersten Zyklon des Zyklonschwebegas-Vorwärmersystems zwecks Abtrennung des calcinierten Rohmehls vom Gasstrom eingeführt wird. Außerdem betrifft die Erfindung eine Anlage zur Durchführung des Verfahrens.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflußseitig gesehen einen Calcinator bzw. eine Calcinierstufe vorzuschalten, die mit einer Zweitfeuerung (neben der Feuerung im Drehrohrofen) ausgestattet ist. Bekannt ist ein Calcinator, bei dem ein mit Brennstoff versorgter die Gas-Feststoff-Suspension führender aufsteigender Rohrleitungsast um 180° in einen absteigenden Rohrleitungsast umgelenkt wird (z. B. EP-B-0 222 044 sowie EP-B-0 526 770). Der in die Calcinierstufe eingeführte Brennstoff jeglicher Art, z. B. Kohlenstaub, wird mit vom Klinkerkühler kommender heißer Abluft, Tertiärluft genannt, möglichst vollständig verbrannt, d. h. mit Sauerstoffüberschuß inbesondere in der Tertiärluftleitung selbst. Die entstehende Verbrennungswärme wird augenblicklich auf das Rohmehl übertragen und zur Calcinierung des Rohmehls noch vor Einführung in den Drehrohrofen verwendet, wobei die Temperatur nicht wesentlich über die Dissoziationstemperatur der Entcarbonatisierungsreaktion steigt. Man ist heute bestrebt, bis etwa 65 % des für eine Zementklinkerproduktionslinie ingesamt benötigten Brennstoffs in dem dem Drehrohrofen vorgeschalteten Calcinator zu verfeuern, und nur die restlichen 35% Brennstoff im Drehrohrofen selbst zu verfeuern. Das heißt, bei modernen Anlagen erfolgt der überwiegende Brennstoffeinsatz also im Calcinator, weil der spezifische Wärmebedarf bzw. Wärmeverbrauch im Calcinator in Höhe von ca. 550 kcal pro kg entsäuertes Rohmehl zur Durchführung der endothermen Calcinierungs-(Entsäuerungs-)Reaktion höher liegt als der noch im nachgeschalteten Drehrohrofen auftretende Wärmebedarf. Es kommt daher auf eine möglichst vollständige Calcinierung des Rohmehls in der dem Drehrohrofen vorgeschalteten Calcinierstufe an.

Beim Calcinator der beiden o. g. Druckschriften wird das Drehofenabgas mit der vom Klinkerkühler kommenden Tertiärluft zusammengefaßt. Vor der Zusammenfassung wird in der Drehofenabgassteigleitung Brennstoff unterstöchiometrisch, d. h. mit Sauerstoffunterschuß verbrannt zwecks Schaffung einer CO-haltigen Reduktionszone bzw. CO-Gassträhne zur Reduktion des Schadstoffes NOₓ, der insbesondere durch die Hochtemperaturverbrennung im Drehrohrofen gebildet worden ist (thermisches NOₓ), während im benachbarten Tertiärluftkanal Brennstoff überstöchiometrisch, d. h. mit Sauerstoffüberschuß verbrannt wird. Suspensionsströmungsabwärts gesehen wird dann das in der NOₓ-Reduktionszone nicht verbrauchte CO mittels überschüssigen Sauerstoffs aus dem Tertiärluftkanal verbrannt, wobei der Restausbrand durch den 180° Rohrleitungskrümmer bzw. bei der bekannten speziellen Ausgestaltung durch eine im Bereich des Rohrleitungskrümmers angeordnete Wirbelkammer bzw. Mischkammer begünstigt wird.

Mit den oben beschriebenen Technologien können die NOₓ-Emissionen von Zementklinkerbrennanlagen ganz erheblich reduziert werden. Es gibt aber Einsatzfälle, bei denen eine weitere NOₓ-Minderung gewünscht ist, insbesondere auch eine Minderung des in der Calcinierstufe bei der Brennstoffverbrennung im Tertiärluftkanal entstehenden Brennstoff- NOₓ, das durch im Brennstoff chemisch gebundenen Stickstoff gebildet wird.

Der Erfindung liegt die Aufgabe zugrunde, bei Zementklinkerproduktionslinien der oben beschriebenen Art einen dem Drehrohrofen vorgeschalteten, mit Zweitfeuerungen ausgestatteten Calcinator zu schaffen, der einerseits ein hochgradig calciniertes Rohmehl und andererseits ein Abgas mit noch weiter abgesenktem NOₓ-Gehalt sowie einen möglichst vollständigen Restausbrand von CO-Gassträhnen und auch noch anderer Brennstoffkomponenten ermöglicht.

Diese Aufgabe wird erfindungsgemäß verfahrensmäßig mit den Maßnahmen des Kennzeichnungsteils des Anspruchs 1 und vorrichtungsmäßig mit den Merkmalen des Kennzeichnungsteils des Anspruchs 7 gelöst. Vorteilhafte Ausgestaltungen der Erfindung sind in den jeweiligen Unteransprüchen angegeben.

Charakteristisch für die erfindungsgemäße Calcinierstufe bzw. den Calcinator ist, daß sowohl der in die Drehofenabgasleitung als auch der in die Kühlerabluftleitung (Tertiärluftkanal) eingeführte Brennstoff unterstöchiometrisch, d. h. mit Sauerstoffunterschuß verbrannt wird zwecks Bildung jeweils einer CO-haltigen Reduktionszone (CO-Strähne) zur NOₓ-Reduktion sowohl in der Drehofenabgasleitung als auch im Tertiärluftkanal, d. h. anders ausgedrückt sowohl im Drehofenabgaskanal als auch im Tertärluftkanal ist wenigstens eine Brennstelle derart vorhanden, daß in der Calcinierstufe CO stark im Überschuß vorliegt, wodurch der NOₓ-Gehalt im Calcinatorabgas sowie im Abgas der gesamten Zementklinkerproduktionslinie weiter abgesenkt werden kann. Um dabei CO-Emissionen zu vermeiden, wird im Calcinator suspensionsströmungsabwärts gesehen in die GasFeststoff-Suspension Verbrennungsluft zum Restausbrand der CO-Strähnen noch in der Calcinierstufe selbst eingeführt. Diese Verbrennungsluft zur Nachverbrennung der aus der Reduktionszone kommenden CO-Strähnen sowie ggf. noch anderer Brennstoffkomponenten wird gemäß einem besonderen Merkmal der Erfindung von der Tertiärluft abgezweigt, welche die in der Calcinierstufe im Tertiärluftkanal befindliche Brennstelle mit Sauerstoff versorgt. Dabei kann die Menge der abgezweigten Tertiärluft etwa ca. 10 bis 50 % der gesamten der Calcinierstufe zugeführten Tertiärluft betragen.

Nach einem besonderen Merkmal der Erfindung ist die Luftzahl λ für die unterstöchiometrische Brennstoffverbrennung im Drehofenabgaskanal kleiner als im Tertiärluftkanal, nämlich sie kann bei der erstgenannten Brennstelle in einem Bereich von etwa 0,1 bis 0,7 und bei der zweitgenannten Brennstelle in einem Bereich von etwa 0,5 bis 1,0 liegen.

Die Erfindung ermöglicht bei einer Zementklinkerproduktionslinie eine wirkungsvolle weitere Absenkung des im Abgas enthaltenen NOₓ aus der Feuerung des Drehrohrofens (hierbei hauptsächlich thermisches NOₓ) und aus der Feuerung des Calcinators (hierbei hauptsächlich Brennstoff-NOₓ), bei gleichzeitiger Schaffung hochgradig (z. B. größer 90 %) calcinierten Zementrohmehls vor Einlauf in den Drehrohrofen.

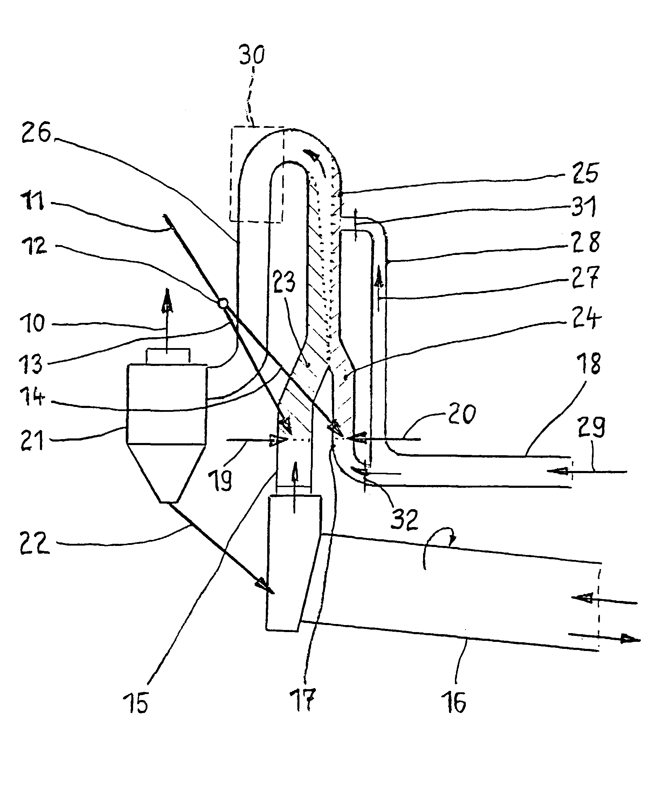

Die Erfindung und deren weitere Merkmale und Vorteile werden anhand des in der Zeichnung schematisch dargestellten Ausführungsbeispieles näher erläutert.

Die Zeichnung zeigt in schematischer Darstellung die Calcinierstufe bzw. den Calcinator einer Anlage zur Herstellung von Zementklinker aus Zementrohmehl, das oben einem Zyklonschwebegas-Vorwärmersystem aufgegeben wird, wo es nacheinander mehrere Zyklonschwebegaswärmetauscher im kombinierten Gleich-/Gegenstrom zum heißen Abgas 10 der Calcinierstufe durchwandert, um im vorletzten (zweituntersten) Zyklon aus dem Gasstrom 10 ausgeschieden und durch die Zuführleitung 11 in der Rohmehlweiche 12 auf die beiden Gutzuführungsleitungen 13 und 14 aufgeteilt zu werden. Das am Zementrohmehl abgekühlte Abgas 10 verläßt nach Durchströmung des obersten Zyklons die Vorwärmstufe der Zementklinkerproduktionslinie.

Während die Rohmehlleitung 13 in die Abgassteigleitung 15 des Drehrohrofens 16 einmündet, mündet die Rohmehlleitung 14 in einen Tertiärluftkanal 17 ein, der mittels der Tertiärluftleitung 18, die vom nicht dargestellten dem Drehrohrofen 16 nachgeschalteten Klinkerkühler kommt, mit Tertiärluft aus dem Klinkerkühler versorgt wird. Etwa im Bereich der Rohmehleinführung ist die Drehofenabgassteigleitung 15 mit einer Brennstoffzuführung 19 und der Tertiärluftkanal 17 mit einer Brennstoffzuführung 20 versehen. Das in der Calcinierstufe calcinierte (entsäuerte) Zementrohmehl wird im Zyklon 21 vom heißen Abgasstrom 10 abgetrennt und als hochgradig (z. B. 95 %) calciniertes Zementrohmehl 22 in den Drehrohrofen 16 eingeführt, in dessen Sinterzone es zu Zementklinker gebrannt wird.

Sowohl der in die Drehofenabgassteigleitung 15 eingeführte Brennstoff 19 als auch der in den Tertiärluftkanal 17 eingeführte Brennstoff 20, z. B. jeweils Kohlenstaub, werden unterstöchiometrisch, d. h. mit Sauerstoffunterschuß verbrannt zwecks Bildung jeweils einer CO-haltigen Reduktionszone in Gestalt sich von den Brennstoffeinführungen nach oben anschließenden CO-Gassträhnen 23 und 24, die in der Zeichnung durch Linksschraffur bzw. Rechtsschraffur schematisch angedeutet sind. In diesen Reduktionszonen werden das im wesentlichen von der Drehofenfeuerung kommende NOₓ sowie das im wesentlichen von der Brennstelle 20 kommende Brennstoff-NOₓ reduziert, d. h. durch Zersetzung unschädlich gemacht, so daß die NOₓ-Emission des Abgases 10 der Calcinierstufe minimiert ist. Die Abgase der Brennstellen 19 und 20 der Calcinierstufe werden zusammengefaßt und sie bilden den aufsteigenden Ast 25 des Calcinators mit Umlenkung der Gas-Feststoff-Suspension in einen absteigenden Rohrleitungsast 26, der zum Zyklon 21 führt. Es wäre aber auch möglich, die Abgasleitungen mit den Brennstellen 19 und 20 getrennt zu halten und mit beiden Abgassträngen eine Zweistrang-Zyklonschwebegas-Vorwärmeranlage zu bedienen, wobei dann beide Calcinatoren mit einer Tertiärluftabzweigleitung 28 verbunden sind.

Von den Brennstellen 19 und 20 suspensionsströmungsabwärts gesehen wird in die Suspension, gemäß zeichnerischem Ausführungsbeispiel in den aufsteigenden Rohrleitungsast 25 des Calcinators Verbrennungsluft 27 zum Restausbrand der CO-Strähnen 23, 24 bzw. des für die NOₓ-Reduktionsrektion nicht benötigten überschüssigen CO sowie anderer Brennstoffkomponenten eingeführt, und zwar erfindungsgemäß über eine Zweigleitung 28, die von der vom Klinkerkühler kommenden Tertiärluftleitung 18 abgezweigt ist. Es können auch weitere Tertiärluft-Abzweigleitungen 28a etc. vorhanden sein, die wie in der Zeichnung gestrichelt dargestellt an strömungsabwärtigen Stellen in den aufsteigenden Rohrleitungsast 25 des Calcinators einmünden. Dabei wird von der vom Klinkerkühler kommenden Tertiärluft 29 eine solche Luftmenge 27 zum Restausbrand der CO-Strähnen 23, 24 abgezweigt, daß der Brennstoff 20, der im Tertiärluftkanal 17 bei nicht abgezweigter Tertiärluft, d. h. mit der gesamten Tertiärluft 29 mit Sauerstoffüberschuß verbrennen würde, bei abgezweigter Tertiärluft 27 mit Sauerstoffunterschuß verbrennt (Brennstelle 20). So kann die Menge der abgezweigten Tertiärluft 27 etwa 10 bis 50 % der gesamten Tertiärluftmenge 29 betragen.

Es wird noch hervorgehoben, daß das jeweils etwa im Bereich der Brennstellen 19 bzw. 20 in die Calcinierstufe eingeführte erhitzte Rohmehl 13 bzw. 14 als Katalysator für die NOₓ-Zersetzungsreaktionen wirkt.

Wie aus der Zeichnung noch hervorgeht, kann in der Calcinierstufe im Bereich der Umlenkung vom aufsteigenden Rohleitungsast 25 um etwa 180° in den absteigenden Rohrleitungsast 26 noch eine Wirbelkammer bzw. Mischkammer 30 zur innigen Vermischung der Gas-Rohmehl-BrennstoffSuspension angeordnet sein, wodurch der Restausbrand etwa noch vorhandener CO-Gassträhnen sowie ggf. noch vorhandener anderer Brennstoffkomponenten mit Sicherheit gewährleistet ist. Die Mischkammer 30 kann z. B. einen oberen tangentialen Suspensionseintritt sowie eine zentrale untere Austragsöffnung aufzuweisen; sie kann aber auch einen tangentialen Eintritt und einen tangentialen Austritt aufweisen.

Zur Steuerung der Aufteilung der Tertiärluft 29 auf den Tertiärluftkanal 17 sowie auf die Abzweigleitung 28 im gewünschten Verhältnis können noch in der Leitung 17 bzw. in der Abzweigleitung 28, 28a Stellglieder wie Klappen 31, 32 etc. angeordnet sein.

## Patentansprüche

1. Verfahren zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (Drehofen) und ein Abluftstrom (Tertiärluft) der Kühlstufe (Klinkerkühler) in der mit Brennstoff (19, 20) versorgten Calcinierstufe zur Calcination des Rohmehls (11) genutzt werden, wobei die Gas-Feststoff-Suspension in der Calcinierstufe umgelenkt und in den untersten Zyklon (21) des Zyklonschwebegas-Vorwärmersystems zwecks Abtrennung des calcinierten Rohmehls (22) vom Gasstrom (10) eingeführt wird,
dadurch gekennzeichnet, daß in der Calcinierstufe sowohl der in die Drehofenabgasleitung (15) als auch der in die Kühlerabluftleitung (17) (Tertiärluftkanal) eingeführte Brennstoff (19, 20) unterstöchiometrisch verbrannt wird zwecks Bildung jeweils einer CO-haltigen Reduktionszone (23, 24) (CO-Strähne) zur NOₓ-Reduktion sowohl in der Drehofenabgasleitung als auch im Tertiärluftkanal, wobei suspensionsströmungsabwärts gesehen in die Suspension Verbrennungsluft (27) zum Restausbrand der CO-Strähnen eingeführt wird.

2. Verfahren nach Anspruch 1,
dadurch gekennzeichnet, daß die die CO-Strähnen (23, 24) beinhaltenden Abgase des Drehofens (16) und des Tertiärluftkanals (17) oberhalb der beiden Brennstellen (19, 20) zusammengefaßt werden, und daß in das gemeinsame Abgas beider Brennstellen abgezweigte Tertiärluft (27) als Verbrennungsluft eingeführt wird.

3. Verfahren nach Anspruch 2,
dadurch gekennzeichnet, daß von der vom Klinkerkühler kommenden Tertiärluft (29) eine solche Menge (27) zum Restausbrand der CO-Strähnen (23, 24) abgezweigt wird, daß der Brennstoff (20), der im Tertiärluftkanal bei nicht abgezweigter Tertiärluft, d. h. mit der gesamten Tertiärluft (29) mit Sauerstoffüberschuß verbrennen würde, bei abgezweigter Tertiärluft (27) mit Sauerstoffunterschuß verbrennt (Brennstelle 20).

4. Verfahren nach Anspruch 3,
dadurch gekennzeichnet, daß die Menge der abgezweigten Tertiärluft (27) ca. 10 bis 50 % der gesamten Tertiärluft (29) beträgt.

5. Verfahren nach einem der Ansprüche 1 bis 4,
dadurch gekennzeichnet, daß sowohl in die Drehofenabgassteigleitung (15) als auch in den Tertiärluftkanal (17) jeweils etwa im Bereich der Brennstellen (19 bzw. 20) erhitztes Rohmehl (13 bzw. 14) als Katalysator für die NOₓ-Zersetzungsreaktionen eingeführt wird.

6. Verfahren nach einem der Ansprüche 1 bis 5,
dadurch gekennzeichnet, daß die Luftzahl λ für die unterstöchiometrische Brennstoffverbrennung im Drehofenabgaskanal (15) kleiner ist als im Tertiärluftkanal (17), nämlich bei der erstgenannten Brennstelle in einem Bereich von etwa 0,1 bis 0,7 und bei der zweitgenannten Brennstelle in einem Bereich von etwa 0,5 bis 1,0 liegt.

7. Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (Drehofen) und ein Abluftstrom (Tertiärluft) der Kühlstufe (Klinkerkühler) in der mit Brennstoff (19, 20) versorgten Calcinierstufe zur Calcination des Rohmehls (11) genutzt werden, wobei die Gas-Feststoff-Suspension in der Calcinierstufe umgelenkt und in den untersten Zyklon (21) des ZyklonschwebegasVorwärmersystems zwecks Abtrennung des calcinierten Rohmehls (22) vom Gasstrom (10) eingeführt wird,
dadurch gekennzeichnet, daß sowohl in der Drehofenabgassteigleitung (15) als auch in der Kühlerabluftleitung (17) (Tertiärluftkanal) eine Brennstelle (19 bzw. 20) mit unterstöchiometrischer Brennstoffverbrennung angeordnet ist, und daß suspensionsströmungsabwärts gesehen in den Drehofenabgaskanal/Tertiärluftkanal Verbrennungsluft (27) einmündet, die über wenigstens eine Zweigleitung (28) bzw. (28a) von der vom Klinkerkühler kommenden Tertiärluftleitung (18) abgezweigt ist.

8. Anlage nach Anspruch 7,
dadurch gekennzeichnet, daß in der Calcinierstufe im Bereich ihrer Strömungsumlenkung eine Wirbelkammer bzw. Mischkammer (30) zur innigen Vermischung der Gas-Rohmehl-Brennstoff-Suspension angeordnet ist.

9. Anlage nach Anspruch 7 oder 8,
dadurch gekennzeichnet, daß die abgezweigte Tertiärluftleitung (28 bzw. 28a) in den Drehofenabgaskanal/Tertiärluftkanal einmündet, bevor die Gas-Feststoff-Suspension in der Calcinierstufe aus dem aufsteigenden Rohrleitungsast (25) in die Wirbelkammer bzw. Mischkammer (30) bzw. in den absteigenden Rohrleitungsast (26) umgelenkt wird.
